# EUROPEAN PATENT APPLICATION

(11) **EP 4 525 339 A1**
(43) Date of publication of application: **19.03.2025**
(21) Application number: 23802578.7
(22) Date of filing: 13.04.2023
(51) Int. Cl.: H04L 5/00, H04N 19/114

(54) **DATA FLOW MAPPING UPDATING METHOD AND APPARATUS, AND STORAGE MEDIUM**

(30) Priority: 12.05.2022 CN 202210514753
(71) Applicant: Datang Mobile Communications Equipment Co., Ltd., Beijing 100085 (CN)
(72) Inventor: CHEN, Li, Beijing 100085 (CN); ZHAO, Yali, Beijing 100085 (CN)
(74) Representative: Studio Torta S.p.A.
(86) International application number: PCT/CN2023/088108
(87) International publication number: WO 2023/216803

(57) **Abstract**

The present disclosure provides a method and an apparatus for data flow mapping update, and a storage medium. The method includes: receiving mapping relationship change information, where the mapping relationship change information is used as a representation for mapping a target QoS flow to a second DRB, the second DRB being a DRB other than a first DRB to which the target QoS flow is mapped before a mapping relationship is changed; and upon completion of transmission, on the first DRB, of a PDU set under current transmission in the target QoS flow, mapping the target QoS flow to the second DRB, thereby avoiding transmission delays or interruptions caused by a change in the mapping relationship between the QoS flow and the DRB, and improving the reliability of service data transmission.

## Description

This disclosure claims priority to Chinese Patent Application No. 202210514753.9, filed to the China National Intellectual Property Administration on May 12, 2022, and entitled "METHOD AND APPARATUS FOR DATA FLOW MAPPING UPDATE, AND STORAGE MEDIUM", which is hereby incorporated by reference in its entirety.

### TECHNICAL FIELD

The present disclosure relates to the field of communication technology, and in particular to a method and an apparatus for data flow mapping update, and a storage medium.

### BACKGROUND

Extended reality (eXtened Reality, XR) services have requirements for low latency, high throughput and high reliability, necessitating the transmission of large amounts of data within a short period of time. The XR services are modeled based on data frames, where each data frame corresponds to an XR video frame. A single data frame can be divided into multiple data PDUs. The XR services include various types of data frames, and each type of data frames has its own transmission characteristics and transmission requirements.

In 5G systems, quality of service (QoS) flows are mapped to data radio bearers (Data Radio Bearer, DRB) over an access network at the granularity of QoS flows. One or more QoS flows are mapped to a single DRB. When a change occurs in a mapping relationship between an uplink QoS flow and a DRB, a terminal (User Device, UE) immediately transmits a service data adaptation protocol end-marker control packet data unit (Service Data Adaptation Protocol End-Marker Control Packet Data Unit, SDAP End-Marker Control PDU) to a base station through a former DRB. The SDAP End-Marker Control PDU carries a quality of service flow identifier (QoS Flow ID, QFI), indicating to the base station an end of the mapping of the QoS flow identified by the QFI to the former DRB, and an update of the mapping relationship of the QoS flow to a new DRB.

The aforementioned method for mapping relationship update is not suitable for XR services where various PDUs are associated. For example, after a head PDU in a data frame (frame) is transmitted, if the mapping relationship between the QoS flow and the DRB changes, the terminal transmits an SDAP End-Marker Control PDU to the base station and transmits subsequent PDUs in the frame on the new DRB, data delays or even interruptions may be caused in the process of updating the mapping relationship.

### SUMMARY

The present disclosure provides a method and apparatus for data flow mapping update, and a storage medium.

In a first aspect, an embodiment of the present disclosure provides a method for data flow mapping update, being applied to a terminal, including:
receiving mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
upon completion of transmission, on the first DRB, of a packet data unit set, PDU set, under current transmission in the target QoS flow, mapping the target QoS flow to the second DRB.

In an implementation, the PDU set includes one or more of the following items:
PDUs belonging to a same frame, frame;
PDUs belonging to a same slice, slice;
PDUs belonging to a same tile, tile;
PDUs belonging to a same subpicture, subpicture; and
PDUs belonging to a same intra-coded frame, I-frame, and PDUs belonging to a predicted frame, P-frame, and/or a bidirectional predictive frame, B-frame, associated with the intra-coded frame, I-frame.

In an implementation, the PDU set includes PDUs belonging to a same frame, where the PDUs in the PDU set have a same PDU set identifier, or a last PDU in the PDU set has an end identifier, or the last PDU in the PDU set is smaller than other PDUs in the PDU set.

In an implementation, the PDU set identifier is a PDU set sequence number, an intra-coded frame identifier, a predicted frame identifier, or a bidirectional predictive frame identifier.

In an implementation, the PDU set includes PDUs belonging to a same slice, where the PDUs in the PDU set have a same slice identifier;
or, the PDU set includes PDUs belonging to a same tile, where the PDUs in the PDU set have a same tile identifier;
or, the PDU set includes PDUs belonging to a same subpicture, where the PDUs in the PDU set have a same subpicture identifier.

In an implementation, the PDU set includes PDUs belonging to a same intra-coded frame and PDUs belonging to a predicted frame and/or a bidirectional predictive frame associated with the intra-coded frame, and the method further includes:
determining PDUs belonging to a same frame, and determining, according to a size of the frame, PDUs belonging to a same intra-coded frame and PDUs belonging to a predicted frame and/or a bidirectional predictive frame associated with the intra-coded frame;
or, determining, according to a frame identifier carried in PDUs, PDUs belonging to a same intra-coded frame and PDUs belonging to a predicted frame and/or a bidirectional predictive frame associated with the intra-coded frame, where the frame identifier is an intra-coded frame identifier, a predicted frame identifier, or a bidirectional predictive frame identifier.

In an implementation, the mapping the target QoS flow to the second DRB, includes:
transmitting, on the first DRB, a service data adaptation protocol end-marker control, SDAP End-Marker Control, PDU of the target QoS flow; and
delete the mapping relationship between the target QoS flow and the first DRB, and store a mapping relationship between the target QoS flow and the second DRB.

In an implementation, before the receiving the mapping relationship change information, the method further includes:
receiving first indication information, where the first indication information is used as an indication for the terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a second aspect, the present disclosure provides a method for data flow mapping update, being applied to a base station, including:
transmitting mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
receiving, on the first DRB, a service data adaptation protocol end-marker control packet data unit, SDAP End-Marker Control PDU, of the target QoS flow; and
delete the mapping relationship between the target QoS flow and the first DRB, and store a mapping relationship between the target QoS flow and the second DRB.

In an implementation, before the transmitting the mapping relationship change information, the method further includes:
transmitting first indication information, where the first indication information is used as an indication for a terminal to postpone transmission of the SDAP End-Marker Control PDU.

In an implementation, the mapping relationship change information is further used as an indication for the terminal to postpone transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a third aspect, the present disclosure provides an apparatus for data flow mapping update, including a memory, a transceiver and a processor; where:
the memory is configured to store a computer program;
the transceiver is configured to receive or transmit data under control of the processor; and
the processor is configured to read the computer program stored in the memory and perform the following operations:
   receiving mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
   upon completion of transmission, on the first DRB, of a packet data unit, PDU, set under current transmission in the target QoS flow, mapping the target QoS flow to the second DRB.

In an implementation, the PDU set includes one or more of the following items:
PDUs belonging to a same frame;
PDUs belonging to a same slice;
PDUs belonging to a same tile;
PDUs belonging to a same subpicture; and
PDUs belonging to a same intra-coded frame and PDUs belonging to a predicted frame and/or a bidirectional predictive frame associated with the intra-coded frame.

In an implementation, the PDU set includes PDUs belonging to a same frame, where the PDUs in the PDU set have a same PDU set identifier, or a last PDU in the PDU set has an end identifier, or the last PDU in the PDU set is smaller than other PDUs in the PDU set.

In an implementation, the PDU set identifier is a PDU set sequence number, an intra-coded frame identifier, a predicted frame identifier, or a bidirectional predictive frame identifier.

In an implementation, the PDU set includes PDUs belonging to a same slice, where the PDUs in the PDU set have a same slice identifier.
or, the PDU set includes PDUs belonging to a same tile, where the PDUs in the PDU set have a same tile identifier;
or, the PDU set includes PDUs belonging to a same subpicture, where the PDUs in the PDU set have a same subpicture identifier.

In an implementation, the PDU set includes PDUs belonging to a same intra-coded frame and PDUs belonging to a predicted frame and/or a bidirectional predictive frame associated with the intra-coded frame, and the processor is configured to perform the following operations:
determining PDUs belonging to a same frame, and determining, according to a size of the frame, PDUs belonging to a same intra-coded frame and a predicted frame and/or a bidirectional predictive frame associated with the intra-coded frame;
or, determining, according to a frame identifier carried in PDUs, PDUs belonging to a same intra-coded frame and a predicted frame and/or a bidirectional predictive frame associated with the intra-coded frame, where the frame identifier is an intra-coded frame identifier, a predicted frame identifier, or a bidirectional predictive frame identifier.

In an implementation, the processor is configured to perform the following operations:
transmitting, on the first DRB, a service data adaptation protocol end-marker control, SDAP End-Marker Control, PDU of the target QoS flow; and
deleting the mapping relationship between the target QoS flow and the first DRB, and storing a mapping relationship between the target QoS flow and the second DRB.

In an implementation, the processor is configured to perform the following operations:
receiving first indication information, where the first indication information is used as an indication for a terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a fourth aspect, the present disclosure provides an apparatus for data flow mapping update, including a memory, a transceiver and a processor; where:
the memory is configured to store a computer program;
the transceiver is configured to receive or transmit data under control of the processor; and
the processor is configured to read the computer program stored in the memory and perform the following operations:
   transmitting mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
   receiving, on the first DRB, a service data adaptation protocol end-marker control packet data unit, SDAP End-Marker Control PDU, of the target QoS flow; and
   deleting the mapping relationship between the target QoS flow and the first DRB, and storing a mapping relationship between the target QoS flow and the second DRB.

In an implementation, the processor is configured to perform the following operations:
transmitting first indication information, where the first indication information is used as an indication for a terminal to postpone transmission of the SDAP End-Marker Control PDU.

In an implementation, the mapping relationship change information is further used as an indication for the terminal to postpone transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a fifth aspect, the present disclosure provides an apparatus for data flow mapping update, including:
a receiving unit, configured to receive mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a processing unit, configured to, upon completion of transmission, on the first DRB, of a packet data unit, PDU, set under current transmission in the target QoS flow, map the target QoS flow to the second DRB.

In an implementation, the PDU set is one or more of the following items:
PDUs belonging to a same frame;
PDUs belonging to a same slice;
PDUs belonging to a same tile;
PDUs belonging to a same subpicture; and
PDUs belonging to a same intra-coded frame and PDUs belonging to a predicted frame and/or a bidirectional predictive frame associated with the intra-coded frame.

In an implementation, the PDU set includes PDUs belonging to a same frame, where the PDUs in the PDU set have a same PDU set identifier, or a last PDU in the PDU set has an end identifier, or the last PDU in the PDU set is smaller than other PDUs in the PDU set.

In an implementation, the PDU set identifier is a PDU set sequence number, an intra-coded frame identifier, a predicted frame identifier, or a bidirectional predictive frame identifier.

In an implementation, the PDU set includes PDUs belonging to a same slice, where the PDUs in the PDU set have a same slice identifier;
or, the PDU set includes PDUs belonging to a same tile, where the PDUs in the PDU set have a same tile identifier;
or, the PDU set includes PDUs belonging to a same subpicture, where the PDUs in the PDU set have a same subpicture identifier.

In an implementation, the PDU set is PDUs belonging to a same intra-coded frame and PDUs belonging to a predicted frame and/or a bidirectional predictive frame associated with the intra-coded frame, and the processing unit is configured to:
determine PDUs belonging to a same frame, and determine, according to a size of the frame, PDUs belonging to a same intra-coded frame and PDUs belonging to a predicted frame and/or a bidirectional predictive frame associated with the intra-coded frame;
or, determine, according to a frame identifier carried in PDUs, PDUs belonging to a same intra-coded frame and PDUs belonging to a predicted frame and/or a bidirectional predictive frame associated with the intra-coded frame, where the frame identifier is an intra-coded frame identifier, a predicted frame identifier, or a bidirectional predictive frame identifier.

In an implementation, the processing unit is configured to:
transmit, on the first DRB, an SDAP End-Marker Control PDU of the target QoS flow; and
delete the mapping relationship between the target QoS flow and the first DRB, and store a mapping relationship between the target QoS flow and the second DRB.

In an implementation, the apparatus includes a receiving unit, configured to:
receive first indication information, where the first indication information is used as an indication for a terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a sixth aspect, the present disclosure provides an apparatus for data flow mapping update, including:
a transmitting unit, configured to transmit mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a receiving unit, configured to receive, on the first DRB, a service data adaptation protocol end-marker control packet data unit, SDAP End-Marker Control PDU, of the target QoS flow; and
a processing unit, configured to delete the mapping relationship between the target QoS flow and the first DRB, and store a mapping relationship between the target QoS flow and the second DRB.

In an implementation, the transmitting unit is configured to:
transmit first indication information, where the first indication information is used as an indication for a terminal to postpone transmission of the SDAP End-Marker Control PDU.

In an implementation, the mapping relationship change information is further used as an indication for the terminal to postpone transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a quality of service flow identifier, QFI, of the target QoS flow.

In a seventh aspect, the present disclosure provides a computer readable storage medium, storing thereon a computer program, where the computer program is configured to enable a computer to implement the method according to the first aspect or the second aspect.

The present disclosure provides a method and apparatus for data flow mapping update, and a storage medium. In this method, after receiving the mapping relationship change information, the terminal does not execute a remapping process of the QoS flow to the DRB until the completion of transmission of the PDU set under current transmission in the QoS flow. This ensures that associated PDUs are transmitted through a same DRB, avoiding transmission delays or interruptions caused by the change in the mapping relationship between the QoS flow and the DRB, and improving the reliability of service data transmission.

It should be understood that the content described in the foregoing summary section is neither intended to limit key or important features of embodiments of the present invention, nor to limit the scope of the present invention. Other features of the present invention will become readily comprehensible through the following description.

### BRIEF DESCRIPTION OF DRAWINGS

In order to describe the technical solutions in the present disclosure or the prior art more clearly, the following will briefly introduce the drawings that need to be used in the description of the embodiments or the prior art. Apparently, the drawings in the following description are for some embodiments of the present invention. For those of ordinary skill in the art, other drawings may be obtained based on these drawings without creative efforts.
FIG. 1 is a schematic diagram of a relation between an XR data frame and PDUs.
FIG. 2 is a schematic diagram of data frame types of XR services.
FIG. 3 is a schematic diagram of mapping a QoS flow to a DRB in a 5G system.
FIG. 4 is a schematic diagram of a downlink SDAP PDU format with an SDAP header.
FIG. 5 is a schematic diagram of an uplink SDAP PDU format with an SDAP header.
FIG. 6 is a schematic diagram of an SDAP End-Marker Control PDU format.
FIG. 7 is a schematic flowchart of a method for data flow mapping update according to an embodiment of the present disclosure.
FIG. 8 is a first schematic structural diagram of an apparatus for data flow mapping update according to an embodiment of the present disclosure.
FIG. 9 is a second schematic structural diagram of an apparatus for data flow mapping update according to an embodiment of the present disclosure.
FIG. 10 is a third schematic structural diagram of an apparatus for data flow mapping update according to an embodiment of the present disclosure.
FIG. 11 is a fourth schematic structural diagram of an apparatus for data flow mapping update according to an embodiment of the present disclosure.

### DESCRIPTION OF EMBODIMENTS

The term "and/or" in the present disclosure describes an association relationship of associated objects, indicating that there can be three relationships, for example, A and/or B can indicate that A exists alone, A and B exist at the same time, and B exists alone. The character "/" generally indicates that the context objects are in an "or" relationship. In the embodiments of the present application, the term "a plurality of" refers to two or more, other quantifiers are similar thereto.

The technical solutions according to the embodiments of the present disclosure will be described hereunder clearly and comprehensively in conjunction with the accompanying drawings in the embodiments of the present disclosure. Apparently, the described embodiments are merely some of, rather than all of the embodiments of the present disclosure. Based on the embodiments in the present disclosure, all other embodiments obtained by those of ordinary skill in the art without creative efforts shall fall within the protection scope of the present disclosure.

Embodiments of the present disclosure provide a method and an apparatus for data flow mapping update, which improves the reliability of service data transmission and avoids transmission delays or interruptions. The method and the apparatus are based on a same inventive concept. Since the problem-solving principle for the method is similar to that for the apparatus, cross reference can be made between the implementations of the apparatus and the method, and repetitions will not be elaborated.

The technical solutions provided in the embodiments of the present disclosure can be applied to various systems, especially a 5G system. For example, an applicable system can be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, and so on. Each of these various systems includes therein a terminal device and a network device. The system can further include a core network part such as an evolved packet system (Evolved Packet System, EPS), a 5G System (5GS) or the like.

A terminal device related to embodiments of the present disclosure, can refer to a device that provides voice and/or data connectivity to a user, a handheld device with a wireless connectivity function, or other processing devices connected to a wireless modem. In different systems, the terminal device may vary in name. For example, in a 5G system, the terminal device can be referred to as a user equipment (User Equipment, UE). A wireless terminal device can communicate with one or more core networks (Core Network, CN) through a radio access network (Radio Access Network, RAN). The wireless terminal device can be a mobile terminal device such as a mobile phone (or referred to as a "cellular" phone) and a computer with a mobile terminal device, for example, it can be a mobile apparatus which is portable, pocket-sized, handheld, built-in a computer or vehicle-mounted, and exchanges voice and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or the like. The wireless terminal device can also be referred to as a system, a subscriber unit (subscriber unit), a subscriber station (subscriber station), a mobile station (mobile station), a mobile platform (mobile), a remote station (remote station), an access point (access point), a remote terminal device (remote terminal), an access terminal device (access terminal), a user terminal (user terminal), a user agent (user agent), a user device (user device), which is not limited in the embodiments of the present disclosure.

A base station related to the embodiments of the present disclosure can include multiple cells that provide services to the terminal. Depending on the specific application scenarios, a base station can also be referred to as an access point or a device in an access network that communicates with a wireless terminal device through one or more sectors on an air interface, or any other names. For example, the base station related to the embodiments of the present disclosure can be an evolutional network device (evolutional Node B, eNB or e-NodeB) in a long term evolution (long term evolution, LTE) system, a 5G base station (gNB) in a 5G network architecture (next generation system), a home evolved Node B (home evolved Node B, HeNB), a relay node (relay node), a femto (femto), a pico (pico) or the like, which is not limited in the embodiments of the present disclosure. In some network structures, the base station can include a centralized unit (centralized unit, CU) node and a distributed unit (distributed unit, DU) node, where the centralized unit and the distributed unit can be arranged geographically separated.

Each of the base station and the terminal device can use one or multiple antennas for multi input multi output (Multi Input Multi Output, MIMO) transmission, where the MIMO transmission can be Single User MIMO (Single User MIMO, SU-MIMO) or Multiple User MIMO (Multiple User MIMO, MU-MIMO). Depending on the pattern and quantity of antennas, the MIMO transmission can be 2D-MIMO, 3D-MIMO, FD-MIMO, or massive-MIMO, it can also be diversity transmission, precoded transmission, beamforming transmission, or the like.

XR is a collective term for different types of reality, referring to all environments and human-computer interactions that are generated by computer technologies and devices, combining reality and virtuality. It encompasses representative forms such as augmented reality (Augmented Reality, AR), mixed reality (Mixed Reality, MR), and virtual reality (Virtual Reality, VR). XR services have requirements for low latency, high throughput, and high reliability, necessitating the transmission of large amounts of data within a short period of time. This means that the burst throughput during a short period can be significantly higher than an average throughput. For example, an XR service with an average throughput of 100 Mbps may have a burst throughput of up to 300 Mbps within a short measurement window, while also requiring high reliability.

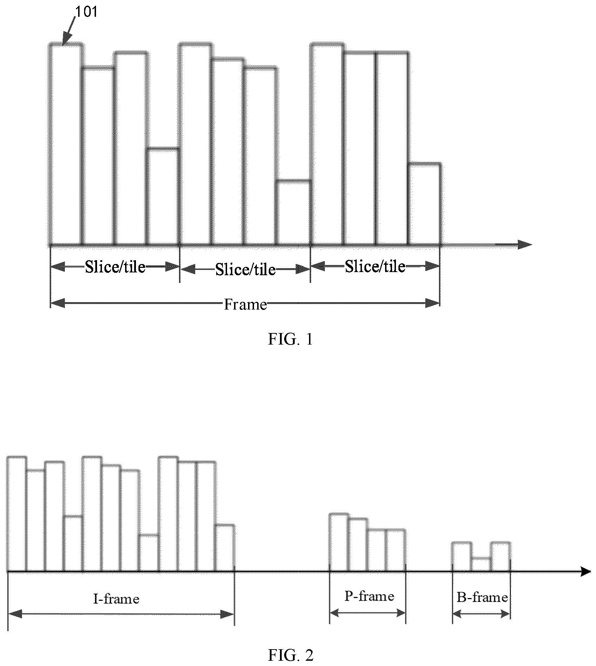

XR services are modeled based on data frames, where each data frame corresponds to an XR video frame. As shown in FIG. 1, a single data frame can be divided into a plurality of slices (slices) or tiles (tiles), and a single slice or tile can contain a plurality of data PDUs. For example, a slice/tile in FIG. 1 includes PDU101 and three other PDUs. A single data PDU corresponds to a service data adaptation protocol (Service Data Adaptation Protocol, SDAP) service data unit (Service Data Unit, SDU) in an access network.

XR services include various types of data frames, and each type of data frames has its own transmission characteristics and transmission requirements. As shown in FIG. 2, an intra-coded frame (intra-coded frame, I-frame) is for intra-coding and can represent a complete picture; a predicted frame (predicted frame, P-frame) is for inter-coding and only needs to carry information of differences from a previous frame. A bidirectional predictive frame (bidirectional predicted frame, B-frame) is for bidirectional predictive coding and only needs to carry changes from a preceding and a subsequent reference frame. Consequently, an I-frame has a larger data volume and higher reliability requirements, whereas a P-frame and a B-frame have smaller data volumes and relatively lower reliability requirements compared to the I-frame. A group of pictures (Group of Pictures, GOP) typically starts with an I-frame, followed by a P-frame or a B-frame.

In XR services, service characteristics are specific to data frames. For example, in a scenario of mixed video streams, the service characteristics may require: a periodicity of 60 frames per second (frames per second, fps), a data rate of 10 Mbps/20 Mbps, and a packet delay budget (packet delay budget, PDB) of 30ms (mandatory) or 10/15/60ms (optional).

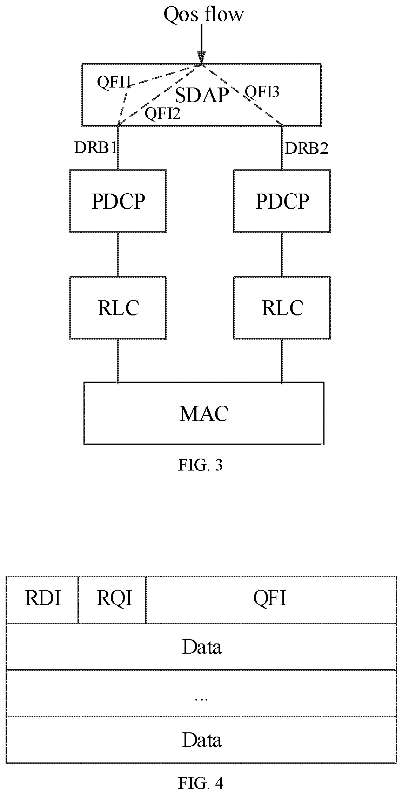

In 5G systems, QoS flows are mapped to DRBs over an access network at the granularity of QoS flows. As shown in FIG. 3, one or more QoS flows are mapped to a single DRB.

In a downlink direction, a base station does not notify the correspondence relationship between a QFI and a DRB in radio resource control (Radio Resource Control, RRC) signaling but only configures whether an SDAP PDU carries an SDAP header. For example, FIG. 4 shows a downlink SDAP PDU with an SDAP header, the UE, upon receiving the downlink transmission, can determine the mapping relationship between the QoS flow (identified by the QFI) and the downlink DRB based on the QFI in the SDAP PDU and the DRB carrying the downlink SDAP PDU.

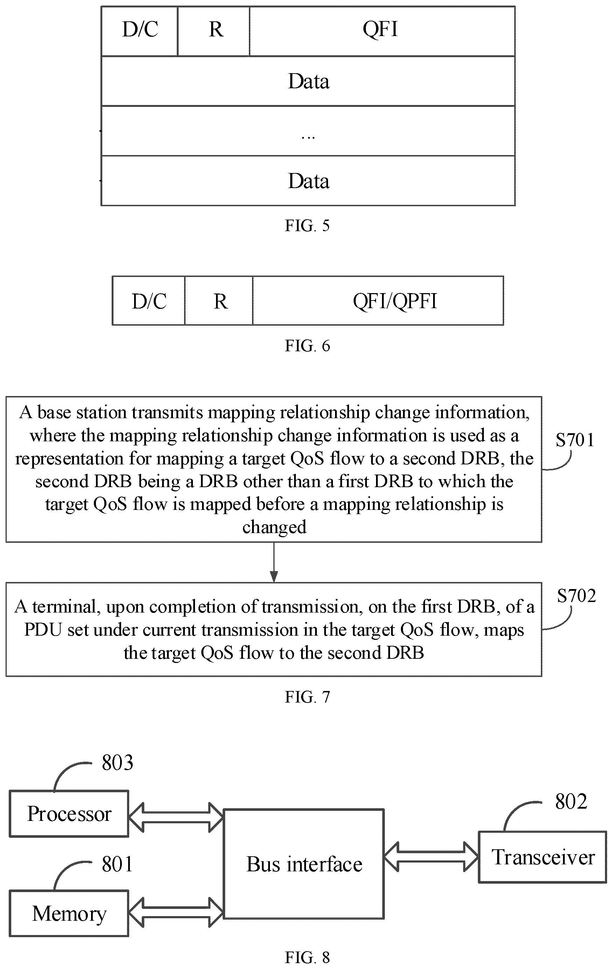

In an uplink direction, there are two manners to map QoS flows to DRBs: explicit configuration and reflective mapping (reflective QoS flow to DRB mapping, also referred to as reflective mapping). The explicit configuration means that the base station explicitly configures the correspondence relationship between a QFI and a DRB ID, and an SDAP PDU may or may not carry an SDAP header. FIG. 5 shows an uplink SDAP PDU with an SDAP header. The reflective mapping means that the terminal receives a downlink SDAP PDU (as shown in FIG. 4) and, when a reflective QoS flow to DRB mapping indication (Reflective QoS flow to DRB mapping Indication, RDI) is 1, the UE, according to the QFI in the downlink SDAP PDU and the DRB ID for the transmission of the downlink SDAP (for example, the QoS flow with a downlink QFI=1 being mapped to the DRB with a downlink DRB ID=1), maps the uplink QFI and uplink DRB based on the same mapping relationship (for example, the QoS flow with an uplink QFI=1 being mapped to the DRB with an uplink DRB ID=1). In other words, every time when receiving a downlink SDAP PDU with RDI=1, the UE updates, according to the mapping between a QFI of the SDAP PDU and a downlink DRB, the mapping relationship between an uplink QFI and an uplink DRB.

Regardless of either the explicit configuration or the reflective mapping, when the mapping relationship between an uplink QoS flow and a DRB changes, the UE transmits, on the former DRB, an SDAP End-Marker Control PDU as shown in FIG. 6. The SDAP End-Marker Control PDU carries a QFI, giving an indication to the base station that the mapping of the QoS flow identified by this QFI to the DRB has ended.

However, for XR services, various PDUs are associated. For example, after a head PDU in a data frame (frame) is transmitted, if the mapping relationship between the QoS flow and the DRB changes, the terminal transmits an SDAP End-Marker Control PDU to the base station and transmits subsequent PDUs in the frame on the new DRB, consequently, data delays or even interruptions may be caused in the process of updating the mapping relationship. For example, XR services, due to their extremely low latency requirements, are often configured with RLC UM, which allows for packet loss. If the SDAP End-Marker Control PDU transmitted by the terminal is lost, the base station and the terminal will have inconsistent mapping rules for QoS flows to DRBs, resulting in errors in packet reception and processing.

To address the aforementioned issues, it is proposed in the embodiments of the present disclosure that, after receiving mapping relationship change information from a base station regarding a QoS flow to a DRB for an XR service, a terminal does not execute the remapping process of the QoS flow to the DRB until the completion of transmission of the associated PDUs under current transmission in the QoS flow. This ensures that associated PDUs are transmitted through a same DRB, avoiding transmission delays or interruptions caused by the change in the mapping relationship between the QoS flow and the DRB, and improving the reliability of service data transmission.

FIG. 7 is a schematic flowchart of a method for data flow mapping update according to an embodiment of the present disclosure. As shown in FIG. 7, the method includes the following.

S701, a base station transmits mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed.

The mapping relationship change information can be explicitly indicative of mapping the target QoS flow to the second DRB, or the mapping relationship change information can be an implicit or implied representation to map the target QoS flow to the second DRB. Optionally, the mapping relationship change information is an RRC message, where the RRC message includes the mapping relationship between the target QoS flow and the second DRB, meaning that the base station provides an indication to a terminal about the mapping relationship between the target QoS flow and the second DRB by means of explicit configuration. Optionally, the mapping relationship change information is a downlink SDAP PDU, where the downlink SDAP PDU is received through the second DRB, and a SDAP header of the downlink SDAP PDU includes a QFI of the target QoS flow, such that the terminal can determine the mapping relationship between the target QoS flow and the second DRB by means of reflective mapping.

S702, a terminal, upon completion of transmission, on the first DRB, of a packet data unit set, PDU set, under current transmission in the target QoS flow, maps the target QoS flow to the second DRB.

After receiving the mapping relationship change information, the terminal does not immediately perform the remapping of the QoS flow to the DRB, but instead first completes the transmission of the PDU set under current transmission in the target QoS flow through the first DRB that is currently mapped, namely, completes the transmission of the PDU set under current transmission in the target QoS flow through a logical channel corresponding to the first DRB. A PDU set refers to a group of associated PDUs. For example, the PDU set is a group of associated PDUs that are determined according to a high-layer indication.

Optionally, the PDU set includes one or more of the following items: PDUs belonging to a same frame, the frame is also referred to as a data burst (data burst), namely, PDUs belonging to a same data burst; PDUs belonging to a same slice (slice); PDUs belonging to a same tile (tile); PDUs belonging to a same subpicture (subpicture); PDUs belonging to a same I-frame and PDUs belonging to a P-frame and/or a B-frame associated with the I-frame. A single data burst, frame, slice, tile, subpicture, I/-frame, P-frame, or B-frame can include one or more PDU sets.

Optionally, PDUs belonging to a same frame may be PDUs belonging to a same I-frame, PDUs belonging to a same P-frame, or PDUs belonging to a same B-frame.

Optionally, the PDU set includes PDUs belonging to a same frame, where the PDUs in the PDU set have a same PDU set identifier, meaning the PDUs within the same frame have the same PDU set identifier. The terminal can identify the PDU set by the PDU set identifier carried by a PDU, the PDU set identifier can also be referred to as a PDU set number. Optionally, the PDU set identifier may be a PDU set sequence number (Sequence Number, SN). The PDU set sequence number may be added by the terminal at the application layer or added by the terminal at the SDAP layer according to a high layer (such as the application layer/IP layer) data flow processing policy issued by a core network. Or, the PDU set identifier can be an I-frame identifier, a P-frame identifier, or a B-frame identifier, meaning that the PDU carries an I-frame identifier, a P-frame identifier, or a B-frame identifier, and PDUs belonging to a same frame have a same frame identifier.

Optionally, the PDU set includes PDUs belonging to a same frame, where a last PDU in the PDU set has an end identifier, meaning the last PDU of the PDUs within the same frame has an end identifier. The terminal can identify the PDU set by the end identifier.

Optionally, the PDU set includes PDUs belonging to a same frame, where the last PDU in the PDU set is smaller than other PDUs in the PDU set, meaning the last PDU of the PDUs within the same frame is smaller than other preceding PDUs. The terminal can identify the PDU set by a size of a PDU. Starting from the reception of a head PDU, the terminal determines the end of the PDU set when it receives the last PDU that is significantly smaller than the preceding PDUs, the head PDU and the last PDU and the PDUs in between are a PDU set.

Optionally, the PDU set includes PDUs belonging to a same slice, where the PDUs in the PDU set have a same slice identifier; the PDU set includes PDUs belonging to a same tile, where the PDUs in the PDU set have a same tile identifier; the PDU set includes PDUs belonging to a same subpicture, where the PDUs in the PDU set have a same subpicture identifier. Namely, the terminal can identify the PDU set by the slice identifier, the tile identifier or the subpicture identifier.

Optionally, the PDU set includes PDUs belonging to a same I-frame and PDUs belonging to a P-frame and/or a B-frame associated with the I-frame, meaning the PDU set includes the PDUs belonging to the same I-frame and the PDUs belonging to the P-frame and/or the B-frame following the I-frame. Optionally, given that an I-frame, P-frame, and B-frame often have different sizes, the terminal can first determine PDUs belonging to a same frame, and then determine, according to a size of the frame, PDUs belonging to a same I-frame and PDUs belonging to a P-frame and/or a B-frame associated with the I-frame. For the method for the terminal to determine the PDUs belonging to the same frame, reference can be made to the aforementioned method. Optionally, the terminal determines, according to an I-frame identifier, a P-frame identifier, or a B-frame identifier carried in PDUs, PDUs belonging to a same I-frame and PDUs belonging to a P-frame and/or a B-frame associated with the I-frame.

Upon the completion of transmission of the PDU set under current transmission in the target QoS flow, the terminal executes the remapping process of the QoS flow to the DRB, namely, mapping the target QoS flow to the second DRB, such that data of the target QoS flow is transmitted on the second DRB in a following process.

The terminal mapping the target QoS flow to the second DRB, includes: the terminal transmitting, on the first DRB, an SDAP End-Marker Control PDU of the target QoS flow, namely, transmitting the SDAP End-Marker Control PDU of the target QoS flow through a logical channel corresponding to the first DRB; and deleting the mapping relationship between the target QoS flow and the first DRB, and stores a mapping relationship between the target QoS flow and the second DRB. The QFI in the SDAP End-Marker Control PDU is the QFI of the target QoS flow, thereby indicating to the base station the end of the mapping between the target QoS flow and the first DRB.

The base station receives, on the first DRB, the SDAP End-Marker Control PDU of the target QoS flow which is transmitted by the terminal, namely, receives the SDAP End-Marker Control PDU of the target QoS flow through the logical channel corresponding to the first DRB; and deletes the mapping relationship between the target QoS flow and the first DRB, and stores the mapping relationship between the target QoS flow and the second DRB. It can be understood that the SDAP End-Marker Control PDU is transmitted by the terminal upon completion of transmission, on the first DRB, of the PDU set under current transmission in the target QoS flow.

In the method for data flow mapping update according to the embodiments of the present disclosure, after receiving, from the base station, the mapping relationship change information of a QoS flow to a DRB, the terminal does not immediately transmit an SDAP End-Marker Control PDU to the base station, but instead, executes the remapping upon the completion of transmission of the PDU set under current transmission in the QoS flow. This ensures that the PDU set is transmitted through a same DRB, avoiding transmission delays or interruptions caused by the change in the mapping relationship between the QoS flow and the DRB, and improving the reliability of service data transmission.

In the method according to the embodiments of the present disclosure, the terminal ensures transmission reliability by postponing the transmission of the SDAP End-Marker Control PDU to the base station. Optionally, whether the terminal can postpone the transmission of the SDAP End-Marker Control PDU can be configured by the base station in advance. Before receiving the mapping relationship change information, the terminal receives first indication information, where the first indication information is used as an indication for the terminal to postpone the transmission of the SDAP End-Marker Control PDU. For example, the first indication information can be indicated by the base station when initially configuring a QoS flow of an XR service. For example, the first indication information is an SDAP configuration message or a DRB configuration message, or it can be other types of messages.

Optionally, whether the terminal can postpone the transmission of the SDAP End-Marker Control PDU can be indicated by the base station in the mapping relationship change information, namely, the mapping relationship change information is further used as an indication for the terminal to postpone the transmission of the SDAP End-Marker Control PDU, for example, indicated in an RRC reconfiguration message or in a downlink SDAP PDU.

Optionally, whether the terminal can postpone the transmission of the SDAP End-Marker Control PDU can be determined by the terminal itself based on a characteristic of a current uplink XR service.

Explanation to the method in the embodiment of the present disclosure is provided in conjunction with a scenario where the mapping relationship between the QoS flow and the DRB is explicitly configured.

Optionally, the base station indicates in the SDAP configuration message (the first indication information) whether the terminal can postpone the transmission of the SDAP End-Marker Control PDU for an uplink (Uplink, UL) QoS flow with QFI=x1.

The base station transmits the RRC reconfiguration message (the mapping relationship change information) to the terminal to indicate a mapping relationship between the UL QoS flow and the DRB, specifically, to indicate mapping of the target QoS flow with QFI=x1 to the DRB with DRB ID=y1 (the second DRB), where before the reconfiguration message, the target QoS flow with QFI=x1 is mapped to a DRB with DRB ID=y0 (the first DRB). Optionally, it is indicated in the RRC reconfiguration message whether the terminal can postpone the transmission of the SDAP End-Marker Control PDU for the UL QoS flow with QFI=x1.

The terminal completes the transmission, on the DRB with DRB ID=y0, of all the PDUs of the PDU set under current transmission in the target QoS flow with QFI=x1, transmits, on the DRB with DRB ID=y0, an SDAP End-Marker Control PDU with QFI=x1, then deletes the mapping relationship between the target QoS flow with QFI=x1 and the DRB with DRB ID=y0, and stores and applies the mapping relationship between the target QoS flow with QFI=x1 and the DRB with DRB ID=y1, meaning transmitting subsequent data of the target QoS flow with QFI=x1 on the DRB with DRB ID=y1.

Upon receiving, on the DRB with DRB ID=y0, the SDAP End-Marker Control PDU with QFI=x1 transmitted by the terminal, the base station deletes the mapping relationship between the target QoS flow with QFI=x1 and the DRB with DRB ID=y0, and stores and applies the mapping relationship between the target QoS flow with QFI=x1 and the DRB with DRB ID=y1, meaning receiving subsequent data of the target QoS flow with QFI=x1 on the DRB with DRB ID=y1.

Explanation to the method in the embodiment of the present disclosure is provided in conjunction with a scenario where the mapping relationship between the QoS flow and the DRB is based on the reflective mapping.

Optionally, through the first indication information, the base station provides an indication to the terminal whether the transmission of the SDAP End-Marker Control PDU can be postponed.

The base station transmits downlink data to the terminal on the DRB with DRB ID=y1 (the second DRB), where the downlink SDAP data PDU (the mapping relationship change information) carries RDI=1 and QFI=x1. Prior to this, the UL QoS flow with QFI=x1 is mapped to the DRB with DRB ID=y0 (the first DRB). Optionally, the base station adds, in the downlink SDAP data PDU, an extended indicator bit which is used to give an indication to the terminal whether the transmission of the SDAP End-Marker Control PDU can be postponed.

The terminal completes the transmission, on the DRB with DRB ID=y0, of all the PDUs of the PDU set under current transmission in the target QoS flow with QFI=x1, transmits, on the DRB with DRB ID=y0, an SDAP End-Marker Control PDU with QFI=x1, then deletes the mapping relationship between the target QoS flow with QFI=x1 and the DRB with DRB ID=y0, and stores and applies the mapping relationship between the target QoS flow with QFI=x1 and the DRB with DRB ID=y1, meaning transmitting subsequent data of the target QoS flow with QFI=x1 on the DRB with DRB ID=y1.

Upon receiving, on the DRB with DRB ID=y0, the SDAP End-Marker Control PDU with QFI=x1 transmitted by the terminal, the base station deletes the mapping relationship between the target QoS flow with QFI=x1 and the DRB with DRB ID=y0, and stores and applies the mapping relationship between the target QoS flow with QFI=x1 and the DRB with DRB ID=y1, meaning receiving subsequent data of the target QoS flow with QFI=x1 on the DRB with DRB ID=y1.

FIG. 8 is a first schematic structural diagram of an apparatus for data flow mapping update according to an embodiment of the present disclosure. As shown in FIG. 8, the apparatus includes: a memory 801, a transceiver 802 and a processor 803.

The memory 801 is configured to store a computer program.

The transceiver 802 is configured to receive or transmit data under control of the processor 803.

The processor 803 is configured to read the computer program in the memory 801 and perform the following operation:
receiving mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
upon completion of transmission, on the first DRB, of a packet data unit, PDU, set under current transmission in the target QoS flow, mapping the target QoS flow to the second DRB.

In an implementation, the PDU set includes one or more of the following items:
PDUs belonging to a same frame; PDUs belonging to a same slice; PDUs belonging to a same tile; PDUs belonging to a same subpicture; and PDUs belonging to a same intra-coded frame and PDUs belonging to a predicted frame and/or a bidirectional predictive frame associated with the intra-coded frame.

In an implementation, the PDU set includes PDUs belonging to a same frame, where the PDUs in the PDU set have a same PDU set identifier, or a last PDU in the PDU set has an end identifier, or the last PDU in the PDU set is smaller than other PDUs in the PDU set.

In an implementation, the PDU set identifier is a PDU set sequence number, an intra-coded frame identifier, a predicted frame identifier, or a bidirectional predictive frame identifier.

In an implementation, the PDU set includes PDUs belonging to a same slice, where the PDUs in the PDU set have a same slice identifier; or, the PDU set includes PDUs belonging to a same tile, where the PDUs in the PDU set have a same tile identifier; or, the PDU set includes PDUs belonging to a same subpicture, where the PDUs in the PDU set have a same subpicture identifier.

In an implementation, the PDU set includes PDUs belonging to a same intra-coded frame and PDUs belonging to a predicted frame and/or a bidirectional predictive frame associated with the intra-coded frame, and the processor 803 is configured to perform the following operations:
determining PDUs belonging to a same frame, and determining, according to a size of the frame, PDUs belonging to a same intra-coded frame and PDUs belonging to a predicted frame and/or a bidirectional predictive frame associated with the intra-coded frame;
or, determining, according to a frame identifier carried in PDUs, PDUs belonging to a same intra-coded frame and PDUs belonging to a predicted frame and/or a bidirectional predictive frame associated with the intra-coded frame, where the frame identifier is an intra-coded frame identifier, a predicted frame identifier, or a bidirectional predictive frame identifier.

In an implementation, the processor 803 is configured to perform the following operations:
transmitting, on the first DRB, an SDAP End-Marker Control PDU of the target QoS flow; and
deleting the mapping relationship between the target QoS flow and the first DRB, and storing a mapping relationship between the target QoS flow and the second DRB.

In an implementation, the processor 803 is configured to perform the following operations:
receiving first indication information, where the first indication information is used as an indication for the terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a QFI of the target QoS flow.

It should be noted that the aforementioned apparatus according to the present disclosure can implement all of the method steps implemented by the terminal in the foregoing method embodiments, and achieve a same technical effect. Same contents and beneficial effects of this embodiment as those of the method embodiments will not be specifically elaborated here.

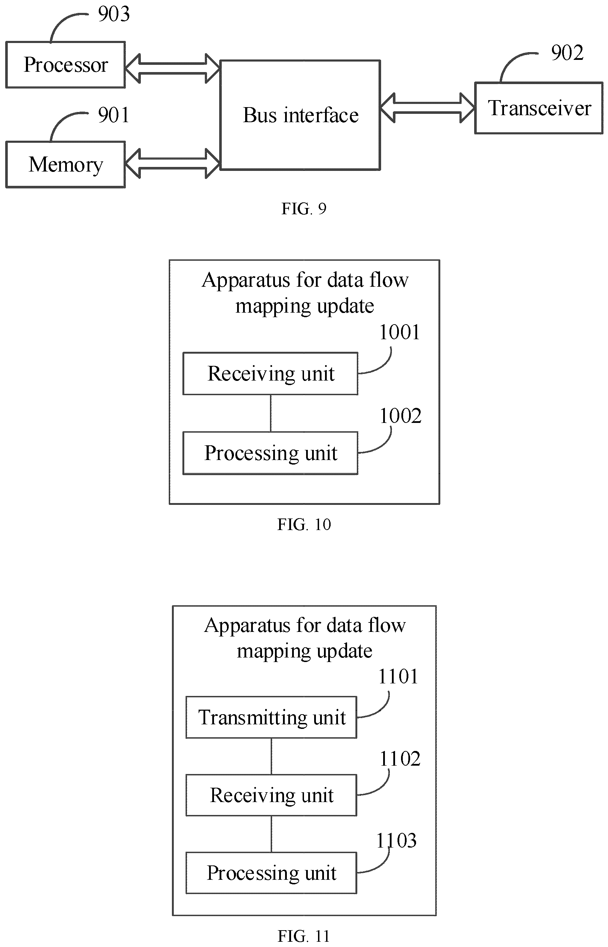

FIG. 9 is a second schematic structural diagram of an apparatus for data flow mapping update according to an embodiment of the present disclosure. As shown in FIG. 9, the apparatus includes: a memory 901, a transceiver 902 and a processor 903.

The memory 901 is configured to store a computer program.

The transceiver 902 is configured to receive or transmit data under control of the processor 903.

The processor 903 is configured to read the computer program in the memory 901 and perform the following operation:
transmitting mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed;
receiving, on the first DRB, an SDAP End-Marker Control PDU of the target QoS flow; and
deleting the mapping relationship between the target QoS flow and the first DRB, and storing a mapping relationship between the target QoS flow and the second DRB.

In an implementation, the processor 903 is configured to perform the following operations:
transmitting first indication information, where the first indication information is used as an indication for a terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a QFI of the target QoS flow.

It should be noted that the aforementioned apparatus according to the present disclosure can implement all of the method steps implemented by the base station in the foregoing method embodiments, and achieve a same technical effect. Same contents and beneficial effects of this embodiment as those of the method embodiments will not be specifically elaborated here.

FIG. 10 is a third schematic structural diagram of an apparatus for data flow mapping update according to an embodiment of the present disclosure. As shown in FIG. 10, the apparatus includes:
a receiving unit 1001, configured to receive mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a processing unit 1002, configured to, upon completion of transmission, on the first DRB, of a packet data unit, PDU, set under current transmission in the target QoS flow, map the target QoS flow to the second DRB.

In an implementation, the PDU set includes one or more of the following items:
PDUs belonging to a same frame; PDUs belonging to a same slice; PDUs belonging to a same tile; PDUs belonging to a same subpicture; and PDUs belonging to a same intra-coded frame and PDUs belonging to a predicted frame and/or a bidirectional predictive frame associated with the intra-coded frame.

In an implementation, the PDU set includes PDUs belonging to a same frame, where the PDUs in the PDU set have a same PDU set identifier, or a last PDU in the PDU set has an end identifier, or the last PDU in the PDU set is smaller than other PDUs in the PDU set.

In an implementation, the PDU set identifier is a PDU set sequence number, an intra-coded frame identifier, a predicted frame identifier, or a bidirectional predictive frame identifier.

In an implementation, the PDU set includes PDUs belonging to a same slice, where the PDUs in the PDU set have a same slice identifier; or, the PDU set includes PDUs belonging to a same tile, where the PDUs in the PDU set have a same tile identifier; or, the PDU set includes PDUs belonging to a same subpicture, where the PDUs in the PDU set have a same subpicture identifier.

In an implementation, the PDU set includes PDUs belonging to a same intra-coded frame and PDUs belonging to a predicted frame and/or a bidirectional predictive frame associated with the intra-coded frame, and the processing unit 1002 is configured to:
determine PDUs belonging to a same frame, and determine, according to a size of the frame, PDUs belonging to a same intra-coded frame and PDUs belonging to a predicted frame and/or a bidirectional predictive frame associated with the intra-coded frame;
or, determine, according to a frame identifier carried in PDUs, PDUs belonging to a same intra-coded frame and PDUs belonging to a predicted frame and/or a bidirectional predictive frame associated with the intra-coded frame, where the frame identifier is an intra-coded frame identifier, a predicted frame identifier, or a bidirectional predictive frame identifier.

In an implementation, the processing unit 1002 is configured to:
transmit, on the first DRB, an SDAP End-Marker Control PDU of the target QoS flow; and
delete the mapping relationship between the target QoS flow and the first DRB, and store a mapping relationship between the target QoS flow and the second DRB.

In an implementation, the apparatus includes a receiving unit, configured to:
receive first indication information, where the first indication information is used as an indication for the terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a QFI of the target QoS flow.

It should be noted that the aforementioned apparatus according to the present disclosure can implement all of the method steps implemented by the terminal in the foregoing method embodiments, and achieve a same technical effect. Same contents and beneficial effects of this embodiment as those of the method embodiments will not be specifically elaborated here.

FIG. 11 is a fourth schematic structural diagram of an apparatus for data flow mapping update according to an embodiment of the present disclosure. As shown in FIG. 11, the apparatus includes:
a transmitting unit 1101, configured to receive mapping relationship change information, where the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a receiving unit 1102, configured to receive, on the first DRB, an SDAP End-Marker Control PDU, of the target QoS flow; and
a processing unit 1103, configured to delete the mapping relationship between the target QoS flow and the first DRB, and store a mapping relationship between the target QoS flow and the second DRB.

In an implementation, the transmitting unit 1101 is configured to:
transmit first indication information, where the first indication information is used as an indication for a terminal to postpone the transmission of the SDAP End-Marker Control PDU.

In an implementation, the mapping relationship change information is further used as an indication for the terminal to postpone the transmission of the SDAP End-Marker Control PDU.

In an implementation, the mapping relationship change information is a radio resource control, RRC, message, where the RRC message includes the mapping relationship between the target QoS flow and the second DRB; or, the mapping relationship change information is a downlink SDAP PDU, where the downlink SDAP PDU is received through the second DRB, and a SDAP header of the downlink SDAP PDU includes a QFI of the target QoS flow.

It should be noted that the aforementioned apparatus according to the present disclosure can implement all of the method steps implemented by the base station in the foregoing method embodiments, and achieve a same technical effect. Same contents and beneficial effects of this embodiment as those of the method embodiments will not be specifically elaborated here.

It should be noted that, in the embodiments of the present disclosure, the partition of the units, being illustrative, is only a logical function partition, and there may be other manners for partition in an actual implementation. In addition, respective functional units in the embodiments of the present disclosure may be integrated into a processing unit, or may exist alone physically, or two or more units may be integrated into one unit. The aforementioned unit can be implemented in a form of hardware, or it can also be implemented in a form of a software function unit.

The aforementioned integrated unit may be stored in a processor readable storage medium if being implemented in the form of a software functional unit and sold or used as a standalone product. Based on such understanding, the technical solutions of the present disclosure, substantively, or a part of which that makes a contribution to the prior art, or the whole or a part of which, may be embodied in the form of a software product which is stored in a storage medium, where a plurality of instructions are included to cause a computer device (which can be a personal computer, a server, a network device, etc.) or a processor (processor) to execute all or part of the steps of the methods according to the various embodiments of the present disclosure. The aforementioned storage medium includes: a USB flash disk, a mobile hard disk, a read-only memory (Read-Only Memory, ROM), a random access memory (Random Access Memory, RAM), a magnetic disk or an optical disk, or other media that can store program codes.

An embodiment of the present disclosure further provides a computer readable storage medium, storing thereon a computer program, where the computer program is configured to enable a computer to implement the method implemented by the terminal or base station in the foregoing method embodiments.

The computer readable storage medium can be any available medium or data storage device that the processor can access, including but not limited to a magnetic memory (such as a floppy disk, a hard drive, a magnetic tape, a magneto-optical disk (MO), etc.), an optical memory (such as a CD, a DVD, a BD, an HVD, etc.), as well as a semiconductor memory (such as a ROM, an EPROM, an EEPROM, a non-volatile memory (NAND FLASH), a solid-state drive (SSD), etc.).

An embodiment of the present disclosure further provides a computer program product, including a computer program, where the computer program, when being executed by a processor, implements the method implemented by the terminal or base station in the foregoing method embodiments.

Those skilled in the art should understand that the embodiments of the present disclosure can be provided as a method, a system, or a computer program product. Therefore, the present disclosure can adopt the form of a complete hardware embodiment, a complete software embodiment, or an embodiment combining software and hardware aspects. Moreover, the disclosure can adopt the form of a computer program product implemented on one or more computer-usable storage media (including but not limited to a magnetic disk storage and an optical storage) containing computer-usable program codes therein.

Embodiments of the present disclosure are described with reference to flowcharts and/or block diagrams of the method, device (system) and computer program product according to the embodiments of the present disclosure. It should be understood that each flow and/or block in the flowchart and/or block diagram, and combinations of the flows and/or blocks in the flowchart and/or block diagram can be implemented by the computer executable instructions. These computer executable instructions can be provided to a processor of a general-purpose computer, a special-purpose computer, an embedded processor or other programmable data processing device to produce a machine, such that the instructions executed by the processor of the computer or other programmable data processing device produce means for implementing the functions specified in one or more flows in the flowcharts and/or one or more blocks in the block diagrams.

These processor executable instructions may also be stored in a processor-readable memory that can direct a computer or other programmable data processing device to function in a particular manner, such that the instructions stored in the processor-readable memory produce an article of manufacture including instruction means that implement the functions specified in one or more flows in the flowcharts and/or one or more blocks in the block diagram.

These processor executable instructions may also be loaded onto a computer or other programmable data processing devices, such that a series of operational steps are performed on the computer or other programmable devices to produce a computer-implemented process, such that the instructions executed on the computer or other programmable devices provide steps for implementing the functions specified in one or more flows in the flowcharts and/or one or more blocks in the block diagram.

Apparently, various modifications and variations can be made to the embodiments of the present disclosure by those skilled in the art without departing from the spirit and scope of the present disclosure. Thus, if these modifications and variations of the embodiments of the present disclosure are within the scope of the claims of the present disclosure and their technical equivalents, the present disclosure is also intended to include these modifications and variations.

## Claims

1. A method for data flow mapping update, being applied to a terminal, **characterized by** comprising:
receiving mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
upon completion of transmission, on the first DRB, of a packet data unit, PDU, set under current transmission in the target QoS flow, mapping the target QoS flow to the second DRB.

2. The method according to claim 1, wherein the PDU set comprises one or more of the following items:
PDUs belonging to a same frame;
PDUs belonging to a same slice;
PDUs belonging to a same tile;
PDUs belonging to a same subpicture; and
PDUs belonging to a same intra-coded frame and PDUs belonging to a predicted frame and/or a bidirectional predictive frame associated with the intra-coded frame.

3. The method according to claim 2, wherein the PDU set comprises PDUs belonging to a same frame, wherein the PDUs in the PDU set have a same PDU set identifier, or a last PDU in the PDU set has an end identifier, or the last PDU in the PDU set is smaller than other PDUs in the PDU set.

4. The method according to claim 3, wherein the PDU set identifier is a PDU set sequence number, an intra-coded frame identifier, a predicted frame identifier, or a bidirectional predictive frame identifier.

5. The method according to claim 2, wherein the PDU set comprises PDUs belonging to a same slice, wherein the PDUs in the PDU set have a same slice identifier;
or, the PDU set comprises PDUs belonging to a same tile, wherein the PDUs in the PDU set have a same tile identifier;
or, the PDU set comprises PDUs belonging to a same subpicture, wherein the PDUs in the PDU set have a same subpicture identifier.

6. The method according to claim 2, wherein the PDU set comprises PDUs belonging to a same intra-coded frame and PDUs belonging to a predicted frame and/or a bidirectional predictive frame associated with the intra-coded frame, and the method further comprises:
determining PDUs belonging to a same frame, and determining, according to a size of the frame, PDUs belonging to a same intra-coded frame and PDUs belonging to a predicted frame and/or a bidirectional predictive frame associated with the intra-coded frame;
or, determining, according to a frame identifier carried in PDUs, PDUs belonging to a same intra-coded frame and PDUs belonging to a predicted frame and/or a bidirectional predictive frame associated with the intra-coded frame, wherein the frame identifier is an intra-coded frame identifier, a predicted frame identifier, or a bidirectional predictive frame identifier.

7. The method according to any one of claims 1 to 6, wherein the mapping the target QoS flow to the second DRB comprises:
transmitting, on the first DRB, a service data adaptation protocol end-marker control, SDAP End-Marker Control, PDU of the target QoS flow; and
deleting the mapping relationship between the target QoS flow and the first DRB, and storing a mapping relationship between the target QoS flow and the second DRB.

8. The method according to claim 7, wherein before the receiving the mapping relationship change information, the method further comprises:
receiving first indication information, wherein the first indication information is used as an indication for the terminal to postpone the transmission of the SDAP End-Marker Control PDU.

9. The method according to claim 7, wherein the mapping relationship change information is further used as an indication for the terminal to postpone the transmission of the SDAP End-Marker Control PDU.

10. The method according to claim 8 or 9, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

11. A method for data flow mapping update, being applied to a base station, **characterized by** comprising:
transmitting mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
receiving, on the first DRB, a service data adaptation protocol end-marker control packet data unit, SDAP End-Marker Control PDU, of the target QoS flow; and
deleting the mapping relationship between the target QoS flow and the first DRB, and storing a mapping relationship between the target QoS flow and the second DRB.

12. The method according to claim 11, wherein before the transmitting the mapping relationship change information, the method further comprises:
transmitting first indication information, wherein the first indication information is used as an indication for a terminal to postpone transmission of the SDAP End-Marker Control PDU.

13. The method according to claim 11, wherein the mapping relationship change information is further used as an indication for a terminal to postpone transmission of the SDAP End-Marker Control PDU.

14. The method according to any one of claims 11 to 13, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

15. An apparatus for data flow mapping update, **characterized by** comprising: a memory, a transceiver and a processor;
wherein the memory is configured to store a computer program;
the transceiver is configured to receive or transmit data under control of the processor; and
the processor is configured to read the computer program stored in the memory and perform the following operations:
receiving mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
upon completion of transmission, on the first DRB, of a packet data unit, PDU, set under current transmission in the target QoS flow, mapping the target QoS flow to the second DRB.

16. The apparatus according to claim 15, wherein the PDU set comprises one or more of the following items:
PDUs belonging to a same frame;
PDUs belonging to a same slice;
PDUs belonging to a same tile;
PDUs belonging to a same subpicture; and
PDUs belonging to a same intra-coded frame and PDUs belonging to a predicted frame and/or a bidirectional predictive frame associated with the intra-coded frame.

17. The apparatus according to claim 16, wherein the PDU set comprises PDUs belonging to a same frame, wherein the PDUs in the PDU set have a same PDU set identifier, or a last PDU in the PDU set has an end identifier, or the last PDU in the PDU set is smaller than other PDUs in the PDU set.

18. The apparatus according to claim 17, wherein the PDU set identifier is a PDU set sequence number, an intra-coded frame identifier, a predicted frame identifier, or a bidirectional predictive frame identifier.

19. The apparatus according to claim 16, wherein the PDU set comprises PDUs belonging to a same slice, wherein the PDUs in the PDU set have a same slice identifier;
or, the PDU set comprises PDUs belonging to a same tile, wherein the PDUs in the PDU set have a same tile identifier;
or, the PDU set comprises PDUs belonging to a same subpicture, wherein the PDUs in the PDU set have a same subpicture identifier.

20. The apparatus according to claim 16, wherein the PDU set comprises PDUs belonging to a same intra-coded frame and PDUs belonging to a predicted frame and/or a bidirectional predictive frame associated with the intra-coded frame, and the processor is configured to perform the following operations:
determining PDUs belonging to a same frame, and determining, according to a size of the frame, PDUs belonging to a same intra-coded frame and PDUs belonging to a predicted frame and/or a bidirectional predictive frame associated with the intra-coded frame;
or, determining, according to a frame identifier carried in PDUs, PDUs belonging to a same intra-coded frame and PDUs belonging to a predicted frame and/or a bidirectional predictive frame associated with the intra-coded frame, wherein the frame identifier is an intra-coded frame identifier, a predicted frame identifier, or a bidirectional predictive frame identifier.

21. The apparatus according to any one of claims 15 to 20, wherein the processor is configured to perform the following operations:
transmitting, on the first DRB, a service data adaptation protocol end-marker control, SDAP End-Marker Control, PDU of the target QoS flow; and
deleting the mapping relationship between the target QoS flow and the first DRB, and storing a mapping relationship between the target QoS flow and the second DRB.

22. The apparatus according to claim 21, wherein the processor is configured to perform the following operation:
receiving first indication information, wherein the first indication information is used as an indication for a terminal to postpone the transmission of the SDAP End-Marker Control PDU.

23. The apparatus according to claim 21, wherein the mapping relationship change information is further used as an indication for a terminal to postpone the transmission of the SDAP End-Marker Control PDU.

24. The apparatus according to claim 22 or 23, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

25. An apparatus for data flow mapping update, **characterized by** comprising: a memory, a transceiver and a processor;
wherein the memory is configured to store a computer program;
the transceiver is configured to receive or transmit data under control of the processor; and
the processor is configured to read the computer program stored in the memory and perform the following operations:
transmitting mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
receiving, on the first DRB, a service data adaptation protocol end-marker control packet data unit, SDAP End-Marker Control PDU, of the target QoS flow; and
deleting the mapping relationship between the target QoS flow and the first DRB, and storing a mapping relationship between the target QoS flow and the second DRB.

26. The apparatus according to claim 25, wherein the processor is configured to perform the following operation:
transmitting first indication information, wherein the first indication information is used as an indication for a terminal to postpone transmission of the SDAP End-Marker Control PDU.

27. The apparatus according to claim 25, wherein the mapping relationship change information is further used as an indication for a terminal to postpone transmission of the SDAP End-Marker Control PDU.

28. The apparatus according to any one of claims 25 to 27, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

29. An apparatus for data flow mapping update, **characterized by** comprising:
a receiving unit, configured to receive mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a processing unit, configured to, upon completion of transmission, on the first DRB, of a packet data unit, PDU, set under current transmission in the target QoS flow, map the target QoS flow to the second DRB.

30. The apparatus according to claim 29, wherein the PDU set comprises one or more of the following items:
PDUs belonging to a same frame;
PDUs belonging to a same slice;
PDUs belonging to a same tile;
PDUs belonging to a same subpicture; and
PDUs belonging to a same intra-coded frame and PDUs belonging to a predicted frame and/or a bidirectional predictive frame associated with the intra-coded frame.

31. The apparatus according to claim 30, wherein the PDU set comprises PDUs belonging to a same frame, wherein the PDUs in the PDU set have a same PDU set identifier, or a last PDU in the PDU set has an end identifier, or the last PDU in the PDU set is smaller than other PDUs in the PDU set.

32. The apparatus according to claim 31, wherein the PDU set identifier is a PDU set sequence number, an intra-coded frame identifier, a predicted frame identifier, or a bidirectional predictive frame identifier.

33. The apparatus according to claim 30, wherein the PDU set comprises PDUs belonging to a same slice, wherein the PDUs in the PDU set have a same slice identifier;
or, the PDU set comprises PDUs belonging to a same tile, wherein the PDUs in the PDU set have a same tile identifier;
or, the PDU set comprises PDUs belonging to a same subpicture, wherein the PDUs in the PDU set have a same subpicture identifier.

34. The apparatus according to claim 30, wherein the PDU set comprises PDUs belonging to a same intra-coded frame and PDUs belonging to a predicted frame and/or a bidirectional predictive frame associated with the intra-coded frame, and the processing unit is configured to:
determine PDUs belonging to a same frame, and determining, according to a size of the frame, PDUs belonging to a same intra-coded frame and PDUs belonging to a predicted frame and/or a bidirectional predictive frame associated with the intra-coded frame;
or, determine, according to a frame identifier carried in PDUs, PDUs belonging to a same intra-coded frame and PDUs belonging to a predicted frame and/or a bidirectional predictive frame associated with the intra-coded frame, where the frame identifier is an intra-coded frame identifier, a predicted frame identifier, or a bidirectional predictive frame identifier.

35. The apparatus according to any one of claims 29 to 34, wherein the processing unit is configured to:
transmit, on the first DRB, a service data adaptation protocol end-marker control, SDAP End-Marker Control, PDU of the target QoS flow; and
delete the mapping relationship between the target QoS flow and the first DRB, and store a mapping relationship between the target QoS flow and the second DRB.

36. The apparatus according to claim 35, wherein the receiving unit is configured to:
receive first indication information, wherein the first indication information is used as an indication for a terminal to postpone the transmission of the SDAP End-Marker Control PDU.

37. The apparatus according to claim 35, wherein the mapping relationship change information is further used as an indication for a terminal to postpone the transmission of the SDAP End-Marker Control PDU.

38. The apparatus according to claim 36 or 37, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

39. An apparatus for data flow mapping update, **characterized by** comprising:
a transmitting unit, configured to transmit mapping relationship change information, wherein the mapping relationship change information is used as a representation for mapping a target quality of service, QoS, flow to a second radio resource bearer, DRB, the second DRB being a DRB other than a first DRB to which the target QoS flow is mapped before a mapping relationship is changed; and
a receiving unit, configured to receive, on the first DRB, a service data adaptation protocol end-marker control packet data unit, SDAP End-Marker Control PDU, of the target QoS flow; and
a processing unit, configured to delete the mapping relationship between the target QoS flow and the first DRB, and store a mapping relationship between the target QoS flow and the second DRB.

40. The apparatus according to claim 39, wherein the transmitting unit is configured to:
transmit first indication information, wherein the first indication information is used as an indication for a terminal to postpone transmission of the SDAP End-Marker Control PDU.

41. The apparatus according to claim 39, wherein the mapping relationship change information is further used as an indication for a terminal to postpone transmission of the SDAP End-Marker Control PDU.

42. The apparatus according to any one of claims 39 to 41, wherein:
the mapping relationship change information is a radio resource control, RRC, message, wherein the RRC message comprises the mapping relationship between the target QoS flow and the second DRB;
or,
the mapping relationship change information is a downlink SDAP PDU, wherein the downlink SDAP PDU is received through the second DRB, and a SDAP header of the downlink SDAP PDU comprises a quality of service flow identifier, QFI, of the target QoS flow.

43. A computer readable storage medium, **characterized by** storing thereon a computer program, wherein the computer program is configured to enable a computer to implement the method according to any one of claims 1 to 14.
